# EUROPEAN PATENT SPECIFICATION

(11) **EP 3 009 465 B1**
(45) Date of publication and mention of the grant of the patent: **18.04.2018**
(21) Application number: 15189659.4
(22) Date of filing: 23.10.2013
(51) Int. Cl.: C08G 64/30, C08G 64/40

(54) **MELT POLYMERIZATION POLYCARBONATE QUENCHING**
ABSCHRECKUNG VON SCHMELZPOLYMERISATIONSPOLYCARBONAT
TREMPE DE POLYCARBONATE DE POLYMERISATION A L'ETAT FONDU

(43) Date of publication of application: 20.04.2016
(62) Divisional of application: 13382423.5
(73) Proprietor: SABIC Global Technologies B.V., 4612 PX Bergen op Zoom (NL)
(72) Inventor: VIC FERNÁNDEZ, Ignacio, 30390 La Aljorra, Cartagena (ES)
(74) Representative: Balder IP Law, S.L.

(56) References cited:
- EP-A1- 2 540 758
- WO-A1-2005/092951
- JP-A- 2003 335 853
- US-A1- 2007 287 797

## Description

### TECHNICAL FIELD

This application relates to quenching and quenchers in a melt polymerization process.

### BACKGROUND

In melt polymerization processes of polymerizing polycarbonate, a quencher can be added to reduce the activity of a melt catalyst.

EP 2 540 758 A1 provides a melt polymerization reactor system and a method of producing polycarbonate using a late-addition catalyst formulation having a melt transesterification catalyst dispersed in a liquid carrier system which preferably includes less than 10 wt% water. In particular, the process comprises introducing bisphenol A, diphenylcarbonate, and a solution of an onium type/beta catalyst (e.g. tetrabutyl phosphonium acetate) into a continuously stirred vessel (formulation tank); directing the outlet stream in a first reactor, where an early-addition catalyst containing alpha catalyst (e.g. aqueous stream of KNaH2PO4) is added; then pumping the outlet stream to a second reactor, and then to two horizontal polymerization reactors connected in series; a late-addition catalyst is added between the first and the second polymerization reactors. The product polycarbonate existing in the second polymerization reactor is then optionally introduced into a six-barrel twin-screw extruder to mix polymer additives for specific applications, and then is filtered and pelletized.

Improved methods of adding the quencher are desired.

### BRIEF DESCRIPTION

Disclosed herein are methods for adding a quencher.

In the inventive embodiment:
a melt polymerization process comprising: melt polymerizing reactants in the presence of a catalyst composition to form polymerized polycarbonate, wherein the catalyst composition comprising only a beta catalyst; adding a quencher composition to the polymerized polycarbonate, wherein the quencher composition comprises a quencher; directing the polymerized polycarbonate to an extruder, wherein the beta catalyst comprises tetraphenyl phosphonium acetate.

The above described and other features are exemplified by the following figures and detailed description.

### BRIEF DESCRIPTION OF THE DRAWINGS

Refer now to the figures, which are exemplary embodiments, and wherein the like elements are numbered alike.

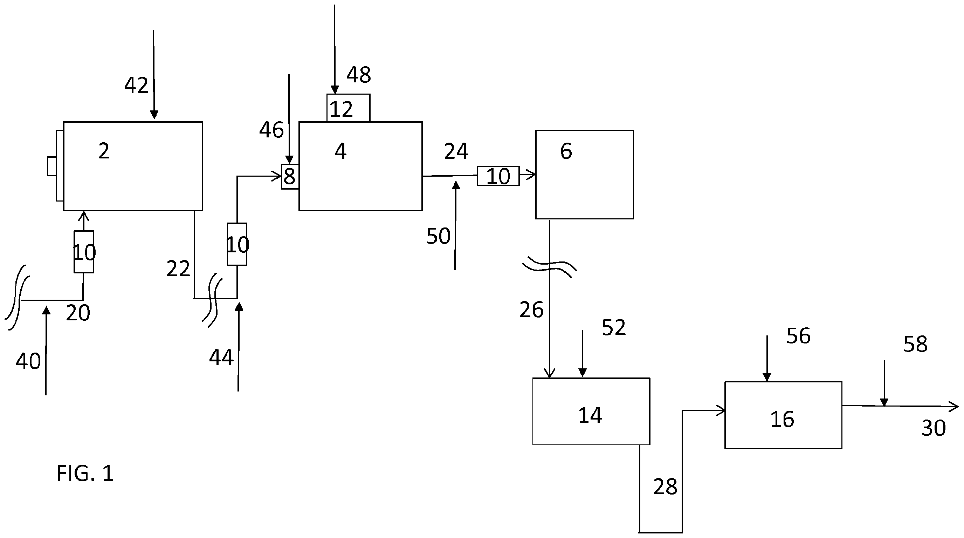

FIG. 1 illustrates a process of adding a quencher composition.

### DETAILED DESCRIPTION

The Applicants developed an improved method of adding a quencher in a quencher composition in a liquid and/or a solid form into a melt polymerization process of polycarbonate according to claims 1-12.

### Polycarbonate

"Polycarbonate" as used herein means a polymer having repeating structural carbonate units of formula (1) 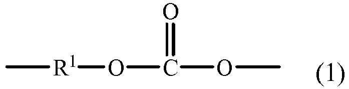 in which at least 60 percent of the total number of R¹ groups contain aromatic moieties and the balance thereof are aliphatic, alicyclic, or aromatic. Each R¹ can be a C₆₋₃₀ aromatic group, that is, contains at least one aromatic moiety. R¹ can be derived from an aromatic dihydroxy compound of the formula HO-R¹-OH, in particular of formula (2)

HO-A¹-Y¹-A²-OH (2)

wherein each of A¹ and A² is a monocyclic divalent aromatic group and Y¹ is a single bond or a bridging group having one or more atoms that separate A¹ from A². One atom can separate A¹ from A². Specifically, each R¹ can be derived from a bisphenol of formula (3) 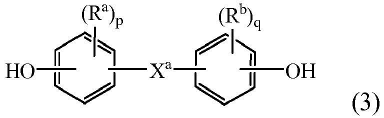 wherein R^{a} and R^{b} are each independently a halogen, C₁₋₁₂ alkoxy, or C₁₋₁₂ alkyl; and p and q are each independently integers of 0 to 4. It will be understood that when p or q is less than 4, the valence of each carbon of the ring is filled by hydrogen. Also in formula (3), X^{a} is a bridging group connecting the two hydroxy-substituted aromatic groups, where the bridging group and the hydroxy substituent of each C₆ arylene group are disposed ortho, meta, or para (specifically para) to each other on the C₆ arylene group. The bridging group X^{a} can be a single bond, -O-, -S-, -S(O)-, -S(O)₂-, -C(O)-, or a C₁₋₁₈ organic group. The C₁₋₁₈ organic bridging group can be cyclic or acyclic, aromatic or non-aromatic, and can further comprise heteroatoms such as halogens, oxygen, nitrogen, sulfur, silicon, or phosphorous. The C₁₋₁₈ organic group can be disposed such that the C₆ arylene groups connected thereto are each connected to a common alkylidene carbon or to different carbons of the C₁₋₁₈ organic bridging group. Each p and q can be 1, and R^{a} and R^{b} can each be a C₁₋₃ alkyl group, specifically methyl, disposed meta to the hydroxy group on each arylene group.

X^{a} can be a substituted or unsubstituted C₃₋₁₈ cycloalkylidene, a C₁₋₂₅ alkylidene of formula -C(R^{c})(R^{d})- wherein R¹ and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl, or a group of the formula -C(=R^{e})- wherein R^{e} is a divalent C₁₋₁₂ hydrocarbon group. Groups of this type include methylene, cyclohexylmethylene, ethylidene, neopentylidene, and isopropylidene, as well as 2-[2.2.1]-bicycloheptylidene, cyclohexylidene, cyclopentylidene, cyclododecylidene, and adamantylidene.

X^{a} can be a C₁₋₁₈ alkylene, a C₃₋₁₈ cycloalkylene, a fused C₆₋₁₈ cycloalkylene, or a group of the formula -B¹-G-B²- wherein B¹ and B² are the same or different C₁₋₆ alkylene and G is a C₃₋₁₂ cycloalkylidene or a C₆₋₁₆ arylene. For example, X^{a} can be a substituted C₃₋₁₈ cycloalkylidene of formula (4) 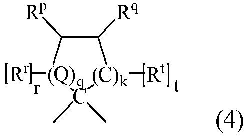 wherein R^{r}, R^{p}, R^{q}, and R^{t} are each independently hydrogen, halogen, oxygen, or C₁₋₁₂ hydrocarbon groups; Q is a direct bond, a carbon, or a divalent oxygen, sulfur, or -N(Z)-where Z is hydrogen, halogen, hydroxy, C₁₋₁₂ alkyl, C₁₋₁₂ alkoxy, or C₁₋₁₂ acyl; r is 0 to 2, t is 1 or 2, q is 0 or 1, and k is 0 to 3, with the proviso that at least two of R^{r}, R^{p}, R^{q}, and R^{t} taken together are a fused cycloaliphatic, aromatic, or heteroaromatic ring. It will be understood that where the fused ring is aromatic, the ring as shown in formula (4) will have an unsaturated carbon-carbon linkage where the ring is fused. When k is one and i is 0, the ring as shown in formula (4) contains 4 carbon atoms, when k is 2, the ring as shown in formula (4) contains 5 carbon atoms, and when k is 3, the ring contains 6 carbon atoms. Two adjacent groups (e.g., R^{q} and R^{t} taken together) can form an aromatic group, and R^{q} and R^{t} taken together can form one aromatic group and R^{r} and R^{p} taken together can form a second aromatic group. When R^{q} and R^{t} taken together form an aromatic group, R^{p} can be a double-bonded oxygen atom, i.e., a ketone.

Bisphenols wherein X^{a} is a cycloalkylidene of formula (4) can be used in the manufacture of polycarbonates containing phthalimidine carbonate units of formula (1a) 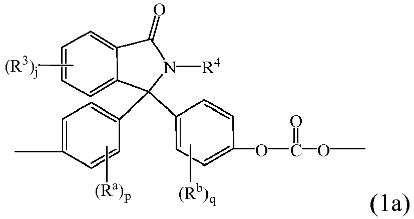 wherein R^{a}, R^{b}, p, and q are as in formula (3), R³ is each independently a C₁₋₆ alkyl, j is 0 to 4, and R₄ is hydrogen, C₁₋₆ alkyl, or a substituted or unsubstituted phenyl, for example a phenyl substituted with up to five C₁₋₆ alkyls. For example, the phthalimidine carbonate units are of formula (1b) 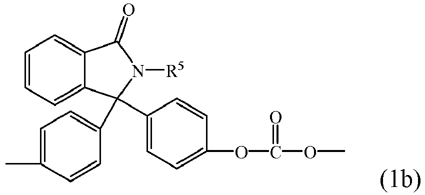 wherein R⁵ is hydrogen, phenyl optionally substituted with up to five 5 C₁₋₆ alkyls, or C₁₋₄ alkyl. In formula (1b), R⁵ can be hydrogen, methyl, or phenyl, specifically phenyl. Carbonate units (1b) wherein R⁵ is phenyl can be derived from 2-phenyl-3,3'-bis(4-hydroxy phenyl)phthalimidine (also known as 3,3-bis(4-hydroxyphenyl)-2-phenylisoindolin-1-one, or N-phenyl phenolphthalein bisphenol ("PPPBP")).

Other bisphenol carbonate repeating units of this type are the isatin carbonate units of formula (1c) and (1d) 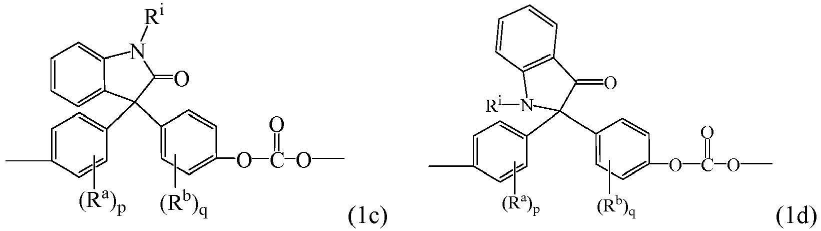 wherein R^{a} and R^{b} are each independently C₁₋₁₂ alkyl, p and q are each independently 0 to 4, and R¹ is C₁₋₁₂ alkyl, phenyl, optionally substituted with 1 to 5 C₁₋₁₀ alkyl, or benzyl optionally substituted with 1 to 5 C₁₋₁₀ alkyl. Each R^{a} and R^{b} can be methyl, p and q can each independently be 0 or 1, and R¹ is C₁₋₄ alkyl or phenyl.

Other examples of bisphenol carbonate units derived from bisphenols (3) wherein X^{a} is a substituted or unsubstituted C₃₋₁₈ cycloalkylidene (4) include the cyclohexylidene-bridged, alkyl-substituted bisphenol of formula (1e) 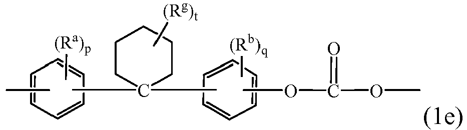 wherein R^{a} and R^{b} are each independently C₁₋₁₂ alkyl, R^{g} is C₁₋₁₂ alkyl, p and q are each independently 0 to 4, and t is 0 to 10. At least one of each of R^{a} and R^{b} can be disposed meta to the cyclohexylidene bridging group. Each R^{a} and R^{b} can independently be C₁₋₄ alkyl, R^{g} is C₁₋₄ alkyl, p and q are each 0 or 1, and t is 0 to 5. R^{a}, R^{b}, and R^{g} can each be methyl, p and q can each be 0 or 1, and t can be 0 or 3, specifically 0.

Examples of other bisphenol carbonate units derived from bisphenol (3) wherein X^{a} is a substituted or unsubstituted C₃₋₁₈ cycloalkylidene include adamantyl units of formula (If) and fluorenyl units of formula (1g) 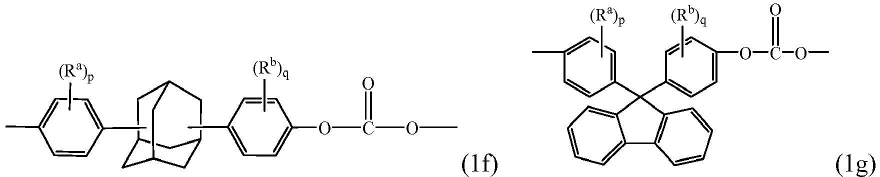 wherein R^{a} and R^{b} are each independently C₁₋₁₂ alkyl, and p and q are each independently 1 to 4. At least one of each of R^{a} and R^{b} can be disposed meta to the cycloalkylidene bridging group. R^{a} and R^{b} can each be independently C₁₋₃ alkyl, and p and q can be each 0 or 1; specifically, R^{a}, R^{b} can each be methyl, p and q are each 0 or 1, and when p and q are 1, the methyl group can be disposed meta to the cycloalkylidene bridging group. Carbonates containing units (1a) to (1g) are useful for making polycarbonates with high glass transition temperatures (Tg) and high heat distortion temperatures.

Other useful dihydroxy compounds of the formula HO-R¹-OH include aromatic dihydroxy compounds of formula (6) 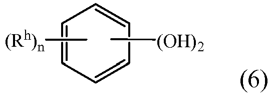 wherein each R^{h} is independently a halogen atom, C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0 to 4. The halogen is usually bromine.

Some illustrative examples of specific dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like, or combinations comprising at least one of the foregoing dihydroxy compounds.

Specific examples of bisphenol compounds of formula (3) include 1,1-bis(4-hydroxyphenyl) methane, 1,1-bis(4-hydroxypheny ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxypheny propane, 1,1-bis(4-hydroxypheny n-butane, 2,2-bis(4-hydroxy-2-methylphenyl) propane, 1,1-bis(4-hydroxy-t-butylphenyl) propane, 3,3-bis(4-hydroxyphenyl) phthalimidine, 2-phenyl-3,3-bis(4-hydroxyphenyl) phthalimidine (PPPBP), and 1,1-bis(4-hydroxy-3-methylphenyl)cyclohexane (DMBPC). Combinations comprising at least one of the foregoing dihydroxy compounds can also be used. The polycarbonate can be a linear homopolymer derived from bisphenol A, in which each of A¹ and A² is p-phenylene and Y¹ is isopropylidene in formula (3).

The polycarbonate herein is prepared via the melt polymerization of a bisphenol and a carbonate precursor. Exemplary carbonate precursors include a carbonyl halide such as carbonyl bromide or carbonyl chloride (phosgene) a bishaloformate of a dihydroxy compound (e.g., the bischloroformate of bisphenol A, hydroquinone ethylene glycol, neopentyl glycol, or the like), and diaryl carbonates. Combinations comprising at least one of the foregoing types of carbonate precursors can also be used. The diaryl carbonate ester can be diphenyl carbonate, or an activated diphenyl carbonate having electron-withdrawing substituents on each aryl, such as bis(4-nitrophenyl)carbonate, bis(2-chlorophenyl)carbonate, bis(4-chlorophenyl)carbonate, bis(methyl salicyl)carbonate, bis(4-methylcarboxylphenyl) carbonate, bis(2-acetylphenyl) carboxylate, bis(4-acetylphenyl) carboxylate, or a combination comprising at least one of the foregoing.

The present polymerization can occur in the presence of a branching agent. Examples of branching agents include polyfunctional organic compounds containing at least three functional groups selected from hydroxyl, carboxyl, carboxylic anhydride, haloformyl, and mixtures of the foregoing functional groups. Such branching agents include aromatic triacyl halides, for example triacyl chlorides of formula (20) 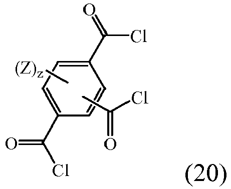 wherein Z is a halogen, C₁₋₃ alkyl, C₁₋₃ alkoxy, C₇₋₁₂ arylalkylene, C₇₋₁₂ alkylarylene, or nitro, and z is 0 to 3; a tri-substituted phenol of formula (21) 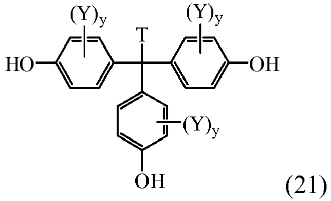 wherein T is a C₁₋₂₀ alkyl, C₁₋₂₀ alkoxy, C₇₋₁₂ arylalkyl, or C₇₋₁₂ alkylaryl, Y is a halogen, C₁₋₃ alkyl, C₁₋₃ alkoxy, C₇₋₁₂ arylalkyl, C₇₋₁₂ alkylaryl, or nitro, s is 0 to 4.

Specific examples of branching agents include trimellitic acid, trimellitic anhydride, trimellitic trichloride, tris-p-hydroxyphenylethane, isatin-bis-phenol of formula (22) 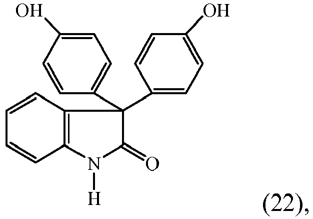 tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid.

In the melt polymerization process, the polycarbonate can be prepared by co-reacting, in a molten state, a dihydroxy reactant and a carbonate precursor in the presence of a transesterification catalyst. The reaction can be carried out in typical polymerization equipment, such as a continuously stirred reactor (CSTR), plug flow reactor, wire wetting fall polymerizers, free fall polymerizers, horizontal polymerizers, wiped film polymerizers, BANBURY mixers, single or twin screw extruders, or a combination comprising one or more of the foregoing. Volatile monohydric phenol is removed from the molten reactants by distillation and the polymer is isolated as a molten residue. Melt polymerization can be conducted as a batch process or as a continuous process. In either case, the melt polymerization conditions used can comprise two or more distinct reaction stages. For example, the polymerization can comprise a first reaction stage in which the starting dihydroxy aromatic compound and diaryl carbonate are converted into an oligomeric polycarbonate and a second reaction stage wherein the oligomeric polycarbonate formed in the first reaction stage is converted to high molecular weight polycarbonate. The first reaction stage can comprise 1 or more, specifically, 2 or more, more specifically, 2 to 4 first stage polymerization units (for example 2 to 4 continuously stirred tanks). When 2 or more first stage polymerization units are present in series, one or both of an increase in temperature or a decrease in pressure can occur from one unit to the next. The second reaction stage can comprise 1 or more, specifically, 2 or more, more specifically, 2 second stage polymerization units (for example 2 horizontal or wire wetting fall polymerizers). When the second reaction stage comprises 2 second stage polymerization units, the first-second stage polymerization unit can polymerize the polycarbonate to a molecular weight of, for example, 20,000 to 50,000 Daltons, the polycarbonate composition can then be optionally quenched, and a second-second stage polymerization unit can function as a devolitalization unit, where the molecular weight of the polycarbonate does not significantly increase (for example, the molecular weight does not increase by greater than 10 weight percent (wt%)) and a temperature, a pressure, and a residence time are used to reduce the concentration of low molecular weight components (such as those with a molecular weight of less than 1,000 Daltons). The first stage polymerization unit is herein defined as a polymerization unit that results in polycarbonates oligomers with a number average molecular weight of less than or equal to 8,000 Daltons and a second stage polymerization unit is herein defined as a polymerization unit that produces polycarbonate with a number average molecular weight of greater than 8,000 Daltons. It is noted that while less than or equal to 8,000 Daltons is used here to define a molecular weight achieved in the first stage, one skilled in the art readily understands that said molecular weight is used to define an oligomerization stage, where the oligomer molecular weight could be greater than 8,000 Daltons. A "staged" polymerization reaction condition can be used in continuous polymerization systems, wherein the starting monomers are oligomerized in a first reaction vessel and the oligomeric polycarbonate formed therein is continuously transferred to one or more downstream reactors in which the oligomeric polycarbonate is converted to high molecular weight polycarbonate. Typically, in the oligomerization stage the oligomeric polycarbonate produced has a number average molecular weight of 1,000 to 7,500 Daltons. In one or more subsequent polymerization stages the number average molecular weight (Mn) of the polycarbonate can be increased to, for example, 8,000 and 25,000 Daltons (using polycarbonate standard), specifically, 13,000 to 18,000 Daltons.

Typically, solvents are not used in the process, and the reactants dihydroxy aromatic compound and the diaryl carbonate are in a molten state. The reaction temperature can be 100 to 350 degrees Celsius (°C), specifically, 180 to 310°C. The pressure can be at atmospheric pressure, supra-atmospheric pressure, or a range of pressures from atmospheric pressure to 15 torr in the initial stages of the reaction, and at a reduced pressure at later stages, for example 0.2 to 15 torr. Likewise, the polymerization can occur in a series of polymerization vessels that can each individually have increasing temperature and/or vacuum. For example, a first stage can occur at a temperature of 100 to 280°C, specifically, 140 to 240°C and a second stage can occur at a temperature of 240 to 350°C, specifically, 280 to 300°C or 240 to 270°C or 250 to 310°C, where the temperature in the second stage is greater than the temperature in the first stage. The reaction time from the initial polymerization unit to the final polymerization unit is generally 0.1 to 15 hours. Likewise, a first stage polymerization can occur at a pressure of greater than or equal to 10 kPa (100 millibars absolute (mbara)) or the first stage polymerization can comprise at least two first stage polymerization units where a first-first stage polymerization unit can have a pressure of greater than or equal to 10 kPa (100 mbara) and a second-first stage polymerization can have a pressure of 1.5 to 9 kPa (15 to 90 mbara), where the first-first stage polymerization unit is upstream of the second-first stage polymerization unit, where one or more first stage polymerization units can be located before, in between, or after said polymerization units.

After a final polymerization vessel (also referred to as a final polymerization unit), the polymer can be introduced to a reactor, extruded, subjected to filtration in a melt filter, or a combination comprising one or more of the foregoing. It is noted that the melt filter can be located before or after the extruder. For example, the melt polymerization process for the manufacture of a polycarbonate composition can comprise: melt polymerizing a dihydroxy reactant and a carbonate compound to produce a molten reaction product; quenching the molten reaction product; filtering the molten reaction product in a melt filter upstream of any extruders; optionally, introducing an additive to form a mixture; and extruding the mixture to form the polycarbonate composition. Likewise, the melt polymerization process for the manufacture of a polycarbonate composition can comprise: melt polymerizing a dihydroxy reactant and a carbonate compound to produce a molten reaction product; introducing a quencher composition and optionally an additive for form a mixture; and extruding the mixture to form the polycarbonate composition.

Catalysts used in the melt transesterification polymerization production of polycarbonates can include alpha and/or beta catalysts. Beta catalysts are typically volatile and degrade at elevated temperatures. Beta catalysts can therefore be used at early low-temperature polymerization stages. Alpha catalysts are typically more thermally stable and less volatile than beta catalysts.

The alpha catalyst can comprise a source of alkali and/or alkaline earth ions. The sources of these ions include alkali metal hydroxides such as lithium hydroxide, sodium hydroxide, and potassium hydroxide, as well as alkaline earth hydroxides such as magnesium hydroxide and calcium hydroxide. Other possible sources of alkali and alkaline earth metal ions include the corresponding salts of carboxylic acids (such as sodium acetate) and derivatives of ethylene diamine tetraacetic acid (EDTA) (such as EDTA tetrasodium salt, and EDTA magnesium disodium salt). Other alpha transesterification catalysts include alkali or alkaline earth metal salts of carbonate, such as Cs₂CO₃, NaHCO₃, and Na₂CO₃, and the like, non-volatile inorganic acid such as NaH₂PO₃, NaH₂PO₄, Na₂HPO₃, KH₂PO₄, CsH₂PO₄, Cs₂HPO₄, and the like, or mixed salts of phosphoric acid, such as NaKHPO₄, CsNaHPO₄, CsKHPO₄, and the like. Combinations comprising at least one of any of the foregoing catalysts can be used.

Possible beta catalysts can comprise a quaternary ammonium compound, a quaternary phosphonium compound, or a combination comprising at least one of the foregoing. The quaternary ammonium compound can be a compound of the structure (R⁴)₄N⁺X⁻, wherein each R⁴ is the same or different, and is a C₁₋₂₀ alkyl, a C₄₋₂₀ cycloalkyl, or a C₄₋₂₀ aryl; and X⁻ is an organic or inorganic anion, for example a hydroxide, halide, carboxylate, sulfonate, sulfate, formate, carbonate, or bicarbonate. Examples of organic quaternary ammonium compounds include tetramethyl ammonium hydroxide, tetrabutyl ammonium hydroxide, tetramethyl ammonium acetate, tetramethyl ammonium formate, tetrabutyl ammonium acetate, and combinations comprising at least one of the foregoing. Tetramethyl ammonium hydroxide is often used. The quaternary phosphonium compound can be a compound of the structure (R⁵)₄P⁺X⁻, wherein each R⁵ is the same or different, and is a C₁₋₂₀ alkyl, a C₄₋₂₀ cycloalkyl, or a C₄₋₂₀ aryl; and X⁻ is an organic or inorganic anion, for example a hydroxide, phenoxide, halide, carboxylate such as acetate or formate, sulfonate, sulfate, formate, carbonate, or bicarbonate. Where X⁻ is a polyvalent anion such as carbonate or sulfate it is understood that the positive and negative charges in the quaternary ammonium and phosphonium structures are properly balanced. For example, where R²⁰ to R²³ are each methyls and X⁻ is carbonate, it is understood that X⁻ represents 2(CO₃⁻²). Examples of organic quaternary phosphonium compounds include tetramethyl phosphonium hydroxide, tetramethyl phosphonium acetate, tetramethyl phosphonium formate, tetrabutyl phosphonium hydroxide, tetrabutyl phosphonium acetate (TBPA), tetraphenyl phosphonium acetate, tetraphenyl phosphonium phenoxide, and combinations comprising at least one of the foregoing. The catalyst composition of the present invention comprises only a beta catalyst that comprises a tetraphenyl phosphonium acetate.

The amount of alpha and beta catalyst used can be based upon the total number of moles of dihydroxy compound used in the polymerization reaction. When referring to the ratio of beta catalyst, for example, a phosphonium salt, to all dihydroxy compounds used in the polymerization reaction, it is convenient to refer to moles of catalyst per mole of the dihydroxy compound, meaning the number of moles of catalyst divided by the sum of the moles of each individual dihydroxy compound present in the reaction mixture. The transesterification catalyst can be used in an amount sufficient to provide 1 x 10⁻⁸ to 1 x 10⁻⁵, specifically, 1 x 10⁻⁷ to 8 x 10⁻⁶, more specifically, 3 x 10⁻⁷ to 2 x 10⁻⁶ moles of catalyst per mole of aromatic dihydroxy compound used. The alpha catalyst can be used in an amount sufficient to provide 1 x 10⁻² to 1 x 10⁻⁸ moles, specifically, 1 x 10⁻⁴ to 1 x 10⁻⁷ moles of metal per mole of the dihydroxy compound used. The amount of beta catalyst (e.g., organic ammonium or phosphonium salts) can be 1 x 10⁻² to 1 x 10⁻⁵, specifically 1 x 10⁻³ to 1 x 10⁻⁴ moles per total mole of the dihydroxy compound in the reaction mixture. The amount of alpha catalyst can be less than the amount of beta catalyst added to the polymerization. Quenching of the transesterification catalysts and any reactive catalyst residues with an acidic compound after polymerization is completed can also be useful in some melt polymerization processes. Removal of catalyst residues and/or quenching agent and other volatile residues from the melt polymerization reaction after polymerization can also be useful in some melt polymerization processes.

The polycarbonate can be, for example, a bisphenol A polycarbonate with a weight average molecular weight of 21800 Daltons with a melt flow of 24 to 32 g/10 min (ASTM D1238, 300°C, 2.16 kg).

The polycarbonate can have a melt flow of 4 to 40 g/10 min, for example, 4.5 to 15 g/10 min or 15 to 35 g/10 min as determined by ASTM D1238 at 300°C, 1.5 kg. The polycarbonate can have a melt flow of 5 to 15 g/10 min as determined by ASTM D1238 at 250°C, 1.5 kg.

### Quencher

A quencher composition can be added at one or more locations in the present melt preparation of the polycarbonate to reduce the activity of the catalyst. The quencher composition comprises a quenching agent (also referred to herein as a quencher). For example, the quenching agent can comprise a sulfonic acid ester such as an alkyl sulfonic ester of the formula RiSO₃R₂ wherein R₁ is hydrogen, C₁-C₁₂ alkyl, C₆-C₁₈ aryl, or C₇-C₁₉ alkylaryl, and R₂ is C₁-C₁₂ alkyl, C₆-C₁₈ aryl, or C₇-C₁₉ alkylaryl. Examples of alkyl sulfonic esters include benzenesulfonate, p-toluenesulfonate, methylbenzene sulfonate, ethylbenzene sulfonate, n-butyl benzenesulfonate, octyl benzenesulfonate and phenyl benzenesulfonate, methyl p-toluenesulfonate, ethyl p-toluenesulfonate, n-butyl p-toluene sulfonate, octyl p-toluenesulfonate and phenyl p- toluenesulfonate. The sulfonic acid ester can comprise alkyl tosylates such as n-butyl tosylate. The sulfonic acid ester can be present in the quencher composition in an amount of 0.1 to 10 volume percent (vol%), specifically, 0.1 to 5 vol%, more specifically, 0.5 to 2 vol% based on the total volume of the quencher composition.

The quenching agent can comprise boric acid esters (e.g., B(OCH₃)₃, B(OCH₂CH₃)₃, and B(OC₆H₆)₃), zinc borate, boron phosphate, aluminum stearate, aluminum silicate, zirconium carbonate, zirconium C₁-C₁₂ alkoxides, zirconium hydroxycarboxylates, gallium phosphide, gallium antimonide, germanium oxide, C₁-C₃₂ organogermanium compounds, C₄-C₃₂ tetraorganotin tin compound, C₆-C₃₂ hexaorganotin compound (e.g., [(C₆H₆O)Sn(CH₂CH₂CH₂CH₃)₂]₂O), Sb₂O₃, antimony oxide, C₁-C₃₂ alkylantimony, bismuth oxide, C₁-C₁₂ alkylbismuth, zinc acetate, zinc stearate, C₁-C₃₂ alkoxytitanium, and titanium oxide, phosphoric acid, phosphorous acid, hypophosphorous acid, pyrophosphoric acid, polyphosphoric acid, boric acid, hydrochloric acid, hydrobromic acid, sulfuric acid, sulfurous acid, adipic acid, azelaic acid, dodecanoic acid, L-ascorbic acid, aspartic acid, benzoic acid, formic acid, acetic acid, citric acid, glutamic acid, salicylic acid, nicotinic acid, fumaric acid, maleic acid, oxalic acid, benzenesulfinic acid, C₁-C₁₂ dialkyl sulfates (e.g., dimethyl sulfate and dibutyl sulfate), sulfonic acid phosphonium salts of the formula (R^{a}SO₃⁻)(PR^{b}₄)⁺ wherein R^{a} is hydrogen, C₁-C₁₂ alkyl, C₆-C₁₈ aryl, or C₇-C₁₉ alkylaryl, and each R^{b} is independently hydrogen, C₁-C₁₂ alkyl or C₆-C₁₈ aryl, sulfonic acid derivatives of the formula A¹-(Y¹-SO₃X¹)ₘ wherein A¹ is a C₁-C₄₀ hydrocarbon group having a valence of m, Y¹ is a single bond or an oxygen atom, X¹ is a secondary or tertiary alkyl group of the formula - CR¹⁵R¹⁶R¹⁷, a metal cation of one equivalent, an ammonium cation (e.g, NR^{b}₃⁺ wherein each R^{b} is independently hydrogen, C₁-C₁₂ alkyl or C₆-C₁₈ aryl), or a phosphonium (e.g, PR^{b}₄⁺ wherein each R^{b} is independently hydrogen, C₁-C₁₂ alkyl or C₆-C₁₈ aryl) wherein R¹⁵ is a hydrogen atom or an alkyl group having 1 to 5 carbon atoms, R¹⁶ is a hydrogen atom, a phenyl group or an alky group having 1 to 5 carbon atoms, and R¹⁷ is the same as or different from R¹⁵ and has the same definition as R¹⁵, provided that two of R¹⁵, R¹⁶, and R¹⁷ cannot be hydrogen atoms, and m is an integer of 1 to 4, provided that when Y¹ is a single bond, all of X¹ in an amount of m cannot be metal cations of one equivalent, a compound of the formula ⁺X²-A²-Y¹-SO₃⁻ wherein A² is a divalent hydrocarbon group, ⁺X² is a secondary, tertiary or quaternary ammonium cation or a secondary (e.g., , tertiary or quaternary phosphonium cation, and Y¹ is a single bond or an oxygen atom, a compound of the formula A³-(⁺X³)ₙ·(R-Y¹-SO₃⁻)ₙ wherein A³ is a C₁-C₄₀ hydrocarbon group having a valence of n, ⁺X³ is a secondary, tertiary or quaternary ammonium cation (e.g., NR^{b}₃⁺ wherein each R^{b} is independently hydrogen, C₁-C₁₂ alkyl or C₆-C₁₈ aryl), or a secondary, tertiary or quaternary phosphonium cation (e.g., PR^{b}₄⁺ wherein each R^{b} is independently hydrogen, C₁-C₁₂ alkyl or C₆-C₁₈ aryl), R is a monovalent C₁-C₄₀ hydrocarbon group, n is an integer of 2 to 4, and Y¹ is a single bond or an oxygen atom, a compound of the formula A⁵-Ad¹-A⁴-(Ad²-A⁵)ℓ wherein A⁵ is a monovalent or divalent C₁-C₄₀ hydrocarbon group, A⁴ is a divalent C₁-C₄₀ hydrocarbon group, each of Ad¹ and Ad² is independently an acid anhydride group selected from -SO₂-O-SO₂-, -SO₂-O-CO-, and -CO-O-SO₂-, and ℓ is 0 or 1, provided that when ℓ is O, -(Ad²-A⁵)ℓ is a hydrogen atom or a bond between A⁴ and A⁵, in which A⁵ is a divalent hydrocarbon group or a single bond, aminosulfonic esters having the formula RₐR_{b}N-A-SO₃Rc, wherein R^{a} and R^{b} are each independently hydrogen, C₁-C₁₂ alkyl, C₆-C₂₂ aryl, C₇-C₁₉ alkylaryl, or R^{a} and R^{b}, either singly or in combination, form an aromatic or non-aromatic heterocyclic compound with N (e.g., pyrrolyl, pyridinyl, pyrimidyl, pyrazinyl, carbazolyl, quinolinyl, imidazoyl, piperazinyl, oxazolyl, thiazolyl, pyrazolyl, pyrrolinyl, indolyl, purinyl, pyrrolydinyl, or the like), R_{c} is hydrogen, and A is C₁-C₁₂ alkyl, C₆-C₁₈ aryl, or C₁₇-C₁₉ alkylaryl (e.g., compounds such as N-(2-hydroxyethyl) piperazine-N'-3-propanesulfonic acid, 1,4,-piperazinebis (ethanesulfonic acid), and 5-dimethylamino-1-napthalenesulfonic acid), ammonium sulfonic esters of the formula RₐR_{b}R_{c}N⁺-A-SO₃⁻, wherein R^{a}, R^{b}, are each independently hydrogen, C₁-C₁₂ alkyl, C₁-C₁₂ aryl, C₇-C₁₉ alkylaryl, or R^{a} and R^{b}, either singly or in combination, form an aromatic or non-aromatic heterocyclic compound with N (e.g., pyrrolyl, pyridinyl, pyrimidyl, pyrazinyl, carbazolyl, quinolinyl, imidazoyl, piperazinyl, oxazolyl, thiazolyl, pyrazolyl, pyrrolinyl, indolyl, purinyl, pyrrolydinyl, or the like), R_{c} is a hydrogen, and A is C₁-C₁₂ alkyl, C₆-C₁₈ aryl, or C₇-C₁₉ alkylaryl, sulfonated polystyrene, methyl acrylate-sulfonated styrene copolymer, and combinations comprising at least one of the foregoing.

The quencher composition can be added in a solid or liquid form. When in the liquid form, the quencher composition can be added, for example, via an addition system. The addition system can comprise a first drum; a buffer drum; a dosing pump; a filter; an injector or a combination comprising one or more of the foregoing, where one or both of the first drum and the buffer drum can comprise an agitator and/or a heating system. For example, the quencher and a liquid carrier can be added to the first drum and then added to a buffer drum. From the buffer drum, the liquid quencher composition can be injected to the polymerization system via an injector located in one or more of a polymerization unit, a reactor, a transfer line, a mixer, and an extruder. The pumping of the quencher composition to a dosing pump can be controlled by a main distribution loop, where the addition of the quencher composition can be monitored with a flow meter, either continuously or intermittently. The pumping can further comprise a controller for automated monitoring of the flow meter and adjustment of the amount of the quencher composition to the polymerization unit. The liquid quencher composition can be added to the polymerized polycarbonate at a pressure of greater than or equal to 200 kPa (2 bars), specifically, greater than or equal to 300 kPa (3 bars), more specifically, 300 to 10 000 kPa (3 to 100 bar). The liquid quencher composition can likewise be added by spraying the liquid onto a solid polycarbonate substrate. The liquid quencher composition can be filtered before it is added to the polymerization system.

When in the solid form, the quencher composition can comprise a quencher and, optionally, a solid carrier, for example, a polycarbonate powder, where the polycarbonate powder can comprise, for example, a melt polycarbonate as herein described in a powder form and/or an interfacial polycarbonate. When in the solid form, the solid quencher composition can be added only directly to and/or downstream of an extruder, for example, in a masterbatch or by spraying onto a solid polycarbonate substrate. Likewise, the solid quencher composition can be added via a feeder, for example, a screw feeder. Specifically, a process for adding a solid quencher composition can comprise pelletizing a melt polymerized polycarbonate to form a polycarbonate; feeding the polycarbonate to an extruder; adding a solid quencher composition to the polycarbonate; and mixing the quencher composition with the polycarbonate for a period of time of greater than or equal to 5 seconds prior to the addition to the polycarbonate of any reactive additive, wherein the reactive additive has a reactive OH group or reactive ester group. The polycarbonate can be melted prior to adding the solid quencher composition.

The solid quencher composition can comprise 0.1 to 100 wt%, specifically, 10 to 99 wt% quencher, based on the total weight of the solid quencher composition.

When in the liquid form, the quencher composition can comprise a liquid carrier. The liquid carrier can comprise a low boiling point solvent such that the boiling point of the low boiling point solvent is less than that of a quenching agent present in the quenching composition. For example, if the quenching agent comprises butyl tosylate, then the low boiling point solvent can have a boiling point of less than 140°C. The low boiling point solvent can be essentially unreactive with the polycarbonate at the temperature and pressure conditions in the extruder, for example, at high temperatures under vacuum. The low boiling point solvent can be capable of solubilizing the quenching agent. The low boiling point solvent can comprise xylene, toluene, benzene, ethylbenzene, anisole, chlorobenzene, and combinations comprising one or more of the foregoing. The low boiling point solvent can comprise water, an organic solvent (such as acetone), or a combination comprising one or both of the foregoing.

The liquid carrier can comprise a high boiling point solvent such that the boiling point of the high boiling point solvent is greater than or equal to that of a quenching agent present in the quenching composition. For example, if the quenching agent comprises butyl tosylate, then the low boiling point solvent can have a boiling point of greater than or equal to 140°C. The high boiling point solvent can comprise a compound present in the melt polymerization. For example, in the melt polymerization of a bisphenol A polycarbonate, the high boiling point solvent can comprise diphenylcarbonate, phenol, bisphenol A, the polycarbonate oligomers, bisphenol A derivatives, propylene carbonate, or a combination comprising one or more of the foregoing.

If both a low boiling point solvent and the high boiling point solvent are present, then they can be soluble in each other. A ratio of the low boiling point solvent and the high boiling point solvent in the quencher composition can be 4:1 to 1:4, specifically, 2:1 to 1:2, more specifically 1.5:1 to 1:1.5. Likewise, the quencher composition can be free of a liquid carrier.

The liquid quencher composition can comprise 0.1 to 99 wt%, specifically, 1 to 50 wt%, more specifically, 1 to 20 wt% quencher based on the total weight of the liquid quencher composition.

Likewise, the quencher composition can be free of a carrier. For example, the quencher composition can include the quencher, additive(s), and no carrier; e.g., can consist of the quencher and an optional additive. The quencher can be added as a molten (i.e. a melted) quencher. When the quencher composition is free of a carrier, the quencher composition can comprise 0.1 to 100 wt% quencher, based on the total weight of the carrier free quencher composition.

The quencher can be added in an amount of greater than or equal to 5 parts per million by weight (ppm), specifically, greater than or equal to 10 ppm based on the total amount of the polymerized polycarbonate. The quencher can be added in an amount of less than or equal to 5 ppm, specifically, less than or equal to 10 ppm based on the total amount of the polymerized polycarbonate. The quencher composition can be added to the polymerization unit such that the quencher is added in an amount of 0.5 to 15 ppm, specifically, 1 to 10 ppm, more specifically, 1.5 to 5 ppm, even more specifically, 1.5 to 3 ppm based on the total weight of the polymerized polycarbonate. Likewise, the quencher composition can be added to the polymerization unit such that the quencher is added in an amount of 5 to 10 ppm, specifically, 6 to 8 ppm based on the total weight of the polymerized polycarbonate. Likewise, the quencher can be added such that the quencher or derivatives thereof are present in an amount of 0.1 to 50 times, specifically, 0.5 to 30 times, per the neutralization equivalent of the catalyst used.

The quencher composition can be added at one or more locations in the melt preparation of the polycarbonate. For example, the quencher composition can be added upstream of a polymerization unit, directly into a polymerization unit (for example, at an inlet, in a side feeder, in an outlet, or a combination comprising one or more of the foregoing), downstream of a polymerization unit, in a reactor that is not polymerizing polycarbonate, upstream of an extruder, directly into an extruder (for example, at the throat of the extruder, in a side feeder, in an outlet, or a combination comprising one or more of the foregoing), downstream of an extruder, or a combination comprising one or more of the foregoing. When added upstream of an extruder, the quencher composition can be added upstream of a final polymerization unit and/or into a final polymerization unit and/or after a final polymerization unit. The quencher composition can be added in the outlet of a first polymerization unit, in the outlet of a second polymerization unit, in a reactor located in between a final polymerization unit and an extruder, in an extruder, or a combination comprising one or more of the foregoing. Likewise, an amount of the quencher composition can be added into and/or after one or more of the staged polymerization units and/or into a finishing extruder. For example, the quencher composition can be added after an initial polymerization unit, fresh catalyst can then be added, and after further polymerization, additional quencher can be added.

The polymerization process can comprise a section of parallel polymerization, where parallel polymerization refers to the splitting of a polymerized polycarbonate stream into two or more streams that may or may not experience the same polymerization conditions thereafter (i.e. they can attain different molecular weights, have different additives added thereto, etc.). For example, polycarbonate can be prepared in a first portion of the polymerization process; a stream comprising polymerized polycarbonate can be split into two or more streams and directed to 2 or more parallel operating lines. For example, a process can comprise polymerizing polycarbonate in a series of first stage polymerization units; a stream exiting the first stage can be split into two streams: A and B, where stream A is directed to second stage polymerization unit A and stream B is directed to second stage polymerization unit B. Likewise, a process can comprise polymerizing polycarbonate in a series of first stage polymerization units followed by polymerizing in a series of second stage polymerization units; a stream exiting the second stage can be split into two streams: A and B, where stream A is directed to extruder A and stream B is directed to extruder B. Likewise, a process can comprise polymerizing polycarbonate in a series of first stage polymerization units followed by polymerizing in a series of two second stage polymerization units; a stream exiting the first-second stage polymerization unit can be split into two streams: A and B, where stream A is directed to second-second stage polymerization unit A and stream B is directed to second-second stage polymerization unit B. In any of the aforementioned scenarios, a quencher composition can be added to one or both of streams A and B, where the quencher composition can be the same or different. One skilled in the art can readily envision other embodiments comprising more than 2 parallel streams and embodiments where the streams are split at different locations.

When the quencher composition is added to a polymerization unit and/or to an extruder, the quencher composition can optionally be mixed, for example, by means of a Henschel mixer, and introduced to a feeder, such as a gravimetric feeder, and then fed to a polymerization unit and/or to an extruder through a feeder, such as a side feeder and/or directly into a throat of the extruder.

When the quencher composition is added to a connecting stream that connects a first unit to a second unit, then the connecting stream comprising the added quencher composition can be mixed via, for example, the establishment of a turbulent flow, an in-line mixer, for example, a static mixer located in a pipe that contains the connecting stream and/or in a mixer unit that houses a rotating paddle, for example a continuously stirred tank. Mixing can occur for 0.3 to 5 minutes, for example, 0.5 to 3 minutes, for example, 1 to 2 minutes. Likewise, the quencher composition can be added to the connecting stream without mixing.

The quencher composition can be added after the formation of the polycarbonate composition, i.e. after extruding and/or melt filtering. For example, after the polycarbonate composition is prepared, the polycarbonate composition can be mixed with a quencher composition, for example, in an in-line mixer, a twin barrel mixer, or the like, and then pelletized. Likewise, the polycarbonate composition can first be pelletized and then the quencher composition can be introduced. The quencher composition can be added, for example, by flowing or spraying, in the solid or liquid form onto polycarbonate pellets and can optionally be mixed with the pellets in, for example, a melt kneader. In this scenario, an additive can be introduced after the introduction of the quencher composition. For example, a pelletized polycarbonate, for example, one that is free of an additive, can be combined with a quencher composition and an antioxidant and/or a release agent can then be added.

The polycarbonate composition can be devolatized to remove low molecular weight (such as those with a molecular weight of less than or equal to 1,000 Daltons). Devolatization can occur in a polymerization unit (for example, in a second stage polymerization unit), in a reactor, in an extruder, in a mixer, or in a combination comprising one or more of the foregoing. The polycarbonate can be quenched prior to devolatization. For example, a quencher can be added upstream of and/or directly to an extruder, the extruder can be devolatized, and an additive can be added.

It is noted that an amount of water can be added to extruder 4 to devolatilize the polycarbonate composition. The amount of water that can be introduced can be 0.1 to 10 wt%, specifically, 0.3 to 5 wt% based on the total weight of the polycarbonate composition.

FIG. 1 illustrates a method of adding the quencher composition to a polymerization system. Specifically, FIG. 1 shows that the quencher composition can be added via one or more of quencher streams 40 - 50. For example, quencher stream 40 can be added to stream 20 and stream 20 can then optionally be mixed in mixer 10; quencher stream 42 can be added to reactor unit 2, where reactor unit 2 can be one or more of a first polymerization vessel, a middle polymerization vessel(s), a final polymerization vessel, and a reactor located after a final polymerization vessel; quencher stream 44 can be added to polymerized stream 22, and polymerized stream 22 can then be optionally mixed in mixer 10; quencher stream 46 can be added to the extruder 4 via the extruder throat 8; quencher stream 48 can be added to the extruder 4 via side feeder 12; and quencher stream 50 can be added to extruded stream 24 and can be optionally mixed in mixer 10. Extruded stream 24 can be fed to melt filter 6 to form polycarbonate composition stream 26. Mixer 10 can be, for example, an in-line mixer, a turbulent flow, or a continuously stirred unit. It is noted that melt filter 6 can likewise be located upstream of extruder 4 and that a quencher composition can be added before and/or after the melt filter. It is further noted that while streams 42, 56, and 58 are illustrated as entering a side of the respective vessels, it is readily understood that these streams can enter the vessel at any appropriate location.

FIG. 1 further illustrates a method of adding a quencher composition to a polycarbonate composition that is further pelletized. Specifically, FIG. 1 shows that the quencher composition can be added via one or more of quencher streams 52 - 58. For example, quencher stream 52 can be added to optional mixer 14, where optional mixer 14 can be, for example, an in-line mixer, a turbulent flow, or a continuously stirred unit (such as a twin barrel extruder); quencher stream 56 can be added to pelletizer 16, for example at a throat of the pelletizer; quencher stream 58 can be added to pelletized stream 30, for example by spraying the quencher composition on the formed pellets.

### Additive

An additive can further be added at one or more locations in the present melt preparation of the polycarbonate. For example, the additive can be added upstream of a polymerization unit, directly into a polymerization unit (for example, at an inlet, in a side feeder, in an outlet, or a combination comprising one or more of the foregoing), downstream of a polymerization unit, in a reactor that is not polymerizing polycarbonate, upstream of an extruder, directly into an extruder (for example, at the throat of the extruder, in a side feeder, in an outlet, or a combination comprising one or more of the foregoing), downstream of an extruder, or a combination comprising one or more of the foregoing. The additive can be added as part of the quencher composition and/or can be added separately. For example, quencher composition comprising a heat stabilizer can be added to the polycarbonate and an additive composition comprising a release agent and a UV agent can be added to the quenched composition. The additive can be added in a molten state or can be added after an extruded polycarbonate is re-melted. The additive can be filtered prior to being added into the polymerization unit.

The additive can comprise, for example, an impact modifier, a flow modifier, a filler (e.g., a particulate polytetrafluoroethylene (PTFE), glass, carbon, a mineral, or metal), a reinforcing agent (e.g., glass fibers), an antioxidant, a heat stabilizer, a light stabilizer, an ultraviolet (UV) agent (such as a UV light stabilizer and a UV absorbing additive), a plasticizer, a lubricant, a release agent (such as a mold release agent (such as glycerol monostearate, pentaerythritol stearate, glycerol tristearate, stearyl stearate, and the like)), an antistatic agent, an antifog agent, an antimicrobial agent, a colorant (e.g, a dye or pigment), a surface effect additive, a radiation stabilizer, a flame retardant, an anti-drip agent (e.g., a PTFE-encapsulated styrene-acrylonitrile copolymer (TSAN)), or a combination comprising one or more of the foregoing. For example, a combination of a heat stabilizer, mold release agent, and ultraviolet light stabilizer can be used. In general, the additives are used in the amounts generally known to be effective. For example, the total amount of the additive composition (other than any impact modifier, filler, or reinforcing agent) can be 0.001 to 10.0 weight percent (wt%), or 0.01 to 5 wt%, each based on the total weight of the polymer in the polymerized composition.

Heat stabilizer additives include organophosphites (e.g. triphenyl phosphite, tris-(2,6-dimethylphenyl)phosphite, tris-(mixed mono-and di-nonylphenyl)phosphite or the like), phosphonates (e.g., dimethylbenzene phosphonate or the like), phosphates (e.g., trimethyl phosphate, or the like), or combinations comprising at least one of the foregoing heat stabilizers. The heat stabilizer can comprise tris(2,4-di-t-butylphenyl) phosphate available as IRGAPHOS™ 168. The heat stabilizer can comprise IRGAPHOS™ 205. Heat stabilizers are generally used in amounts of 0.01 to 5 wt%, based on the total weight of polymer in the composition.

The term "antistatic agent" refers to monomeric, oligomeric, or polymeric materials that can be processed into polymers and/or sprayed onto materials or articles to improve conductive properties and overall physical performance. Examples of monomeric antistatic agents include ethoxylated amines, primary, secondary and tertiary amines, ethoxylated alcohols, alkyl sulfates, alkylarylsulfates, alkylphosphates, alkylaminesulfates, alkyl sulfonate salts such as sodium stearyl sulfonate, sodium dodecylbenzenesulfonate or the like, quaternary ammonium salts, quaternary ammonium polymers, imidazoline derivatives, sorbitan esters, ethanolamides, betaines, or the like, or combinations comprising at least one of the foregoing monomeric antistatic agents.

Polymeric antistatic agents include certain polyesteramides, polyether-polyamide (polyetheramide) block copolymers, polyetheresteramide block copolymers, polyetheresters, or polyurethanes, each containing polyalkylene glycol moieties polyalkylene oxide units such as polyethylene glycol, polypropylene glycol, polytetramethylene glycol, and the like. Such polymeric antistatic agents are commercially available, for example PELESTAT™ 6321 (Sanyo) or PEBAX™ MH1657 (Atofina), IRGASTAT™ P18 and P22 (Ciba-Geigy). Other polymeric materials that can be used as antistatic agents are inherently conducting polymers such as polyaniline (commercially available as PANIPOL™EB from Panipol), polypyrrole and polythiophene (commercially available from Bayer), which retain some of their intrinsic conductivity after melt processing at elevated temperatures. In an embodiment, carbon fibers, carbon nanofibers, carbon nanotubes, carbon black, or a combination comprising at least one of the foregoing can be used in a polymer composition containing chemical antistatic agents to render the composition electrostatically dissipative.

Radiation stabilizers can also be present, specifically gamma-radiation stabilizers. gamma-radiation stabilizers include alkylene polyols such as ethylene glycol, propylene glycol, 1,3-propanediol, 1,2-butanediol, 1,4-butanediol, meso-2,3-butanediol, 1,2-pentanediol, 2,3-pentanediol, 1,4-pentanediol, 1,4-hexandiol, and the like; cycloalkylene polyols such as 1,2-cyclopentanediol, 1,2-cyclohexanediol, and the like; branched alkylenepolyols such as 2,3-dimethyl-2,3-butanediol (pinacol), and the like, as well as alkoxy-substituted cyclic or acyclic alkanes. Unsaturated alkenols are also useful, examples of which include 4-methyl-4-penten-2-ol, 3-methyl-pentene-3-ol, 2-methyl-4-penten-2-ol, 2,4-dimethyl-4-pene-2-ol, and 9-decen-1-ol, as well as tertiary alcohols that have at least one hydroxy substituted tertiary carbon, for example 2-methyl-2,4-pentanediol (hexylene glycol), 2-phenyl-2-butanol, 3-hydroxy-3-methyl-2-butanone, 2-phenyl-2-butanol, and the like, and cyclic tertiary alcohols such as 1-hydroxy-1-methyl-cyclohexane. Certain hydroxymethyl aromatic compounds that have hydroxy substitution on a saturated carbon attached to an unsaturated carbon in an aromatic ring can also be used. The hydroxy-substituted saturated carbon can be a methylol group (-CH₂OH) or it can be a member of a more complex hydrocarbon group such as -CR⁴HOH or -CR₂⁴OH wherein R⁴ is a complex or a simple hydrocarbon. Specific hydroxy methyl aromatic compounds include benzhydrol, 1,3-benzenedimethanol, benzyl alcohol, 4-benzyloxy benzyl alcohol and benzyl benzyl alcohol. 2-Methyl-2,4-pentanediol, polyethylene glycol, and polypropylene glycol are often used for gamma-radiation stabilization.

Colorants such as pigment and/or dye additives can also be present. Useful pigments can include, for example, inorganic pigments such as metal oxides and mixed metal oxides such as zinc oxide, titanium dioxides, iron oxides, or the like; sulfides such as zinc sulfides, or the like; aluminates; sodium sulfo-silicates sulfates, chromates, or the like; carbon blacks; zinc ferrites; ultramarine blue; organic pigments such as azos, di-azos, quinacridones, perylenes, naphthalene tetracarboxylic acids, flavanthrones, isoindolinones, tetrachloroisoindolinones, anthraquinones, enthrones, dioxazines, phthalocyanines, and azo lakes; Pigment Red 101, Pigment Red 122, Pigment Red 149, Pigment Red 177, Pigment Red 179, Pigment Red 202, Pigment Violet 29, Pigment Blue 15, Pigment Blue 60, Pigment Green 7, Pigment Yellow 119, Pigment Yellow 147, Pigment Yellow 150, and Pigment Brown 24; or combinations comprising at least one of the foregoing pigments.

Dyes are generally organic materials and include coumarin dyes such as coumarin 460 (blue), coumarin 6 (green), nile red or the like; lanthanide complexes; hydrocarbon and substituted hydrocarbon dyes; polycyclic aromatic hydrocarbon dyes; scintillation dyes such as oxazole or oxadiazole dyes; aryl- or heteroaryl-substituted poly (C₂₋₈) olefin dyes; carbocyanine dyes; indanthrone dyes; phthalocyanine dyes; oxazine dyes; carbostyryl dyes; napthalenetetracarboxylic acid dyes; porphyrin dyes; bis(styryl)biphenyl dyes; acridine dyes; anthraquinone dyes; cyanine dyes; methine dyes; arylmethane dyes; azo dyes; indigoid dyes, thioindigoid dyes, diazonium dyes; nitro dyes; quinone imine dyes; aminoketone dyes; tetrazolium dyes; thiazole dyes; perylene dyes, perinone dyes; bis-benzoxazolylthiophene (BBOT); triarylmethane dyes; xanthene dyes; thioxanthene dyes; naphthalimide dyes; lactone dyes; fluorophores such as anti-stokes shift dyes which absorb in the near infrared wavelength and emit in the visible wavelength, or the like; luminescent dyes such as 7-amino-4-methylcoumarin; 3-(2'-benzothiazolyl)-7-diethylaminocoumarin; 2-(4-biphenylyl)-5-(4-t-butylphenyl)-1,3,4-oxadiazole; 2,5-bis-(4-biphenylyl)-oxazole; 2,2'-dimethyl-p-quaterphenyl; 2,2-dimethyl-p-terphenyl; 3,5,3"",5""-tetra-t-butyl-p-quinquephenyl; 2,5-diphenylfuran; 2,5-diphenyloxazole; 4,4'-diphenylstilbene; 4-dicyanomethylene-2-methyl-6-(p-dimethylaminostyryl)-4H-pyran; 1,1'-diethyl-2,2'-carbocyanine iodide; 3,3'-diethyl-4,4',5,5'-dibenzothiatricarbocyanine iodide; 7-dimethylamino-1-methyl-4-methoxy-8-azaquinolone-2; 7-dimethylamino-4-methylquinolone-2; 2-(4-(4-dimethylaminophenyl)-1,3-butadienyl)-3-ethylbenzothiazolium perchlorate; 3-diethylamino-7-diethyliminophenoxazonium perchlorate; 2-(1-naphthyl)-5-phenyloxazole; 2,2'-p-phenylen-bis(5-phenyloxazole); rhodamine 700; rhodamine 800; pyrene, chrysene, rubrene, coronene, or the like; or combinations comprising at least one of the foregoing dyes.

Possible fillers or reinforcing agents include, for example, mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, aluminosilicate or (armospheres), kaolin, whiskers of silicon carbide, alumina, boron carbide, iron, nickel, or copper, continuous and chopped carbon fibers or glass fibers, molybdenum sulfide, zinc sulfide, barium titanate, barium ferrite, barium sulfate, heavy spar, TiO₂, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well combinations comprising at least one of the foregoing fillers or reinforcing agents. The fillers and reinforcing agents can be coated with a layer of metallic material to facilitate conductivity, or surface treated with silanes to improve adhesion and dispersion with the polymer matrix. Fillers are used in amounts of 1 to 200 parts by weight, based on 100 parts by weight of based on 100 parts by weight of the total composition.

Antioxidant additives include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite; alkylated monophenols or polyphenols; alkylated reaction products of polyphenols with dienes, such as tetrakis[methylene(3,5-di-tert-butyl-4-hydroxyhydrocinnamate)] methane; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate; amides of beta-(3,5-di-tert-butyl-4-hydroxyphenyl)-propionic acid, or combinations comprising at least one of the foregoing antioxidants. Antioxidants can be used in amounts of 0.01 to 0.1 parts by weight, based on 100 parts by weight of the total composition, excluding any filler.

UV absorbing additives include hydroxybenzophenones; hydroxybenzotriazoles; hydroxybenzotriazines; cyanoacrylates; oxanilides; benzoxazinones; aryl salicylates; monoesters of diphenols such as resorcinol monobenzoate; 2-(2H-benzotriazol-2-yl)-4-(1,1,3,3-tetramethylbutyl)-phenol (CYASORB™ 5411); 2-hydroxy-4-n-octyloxybenzophenone (CYASORB™ 531); 2-[4,6-bis(2,4-dimethylphenyl)-1,3,5-triazin-2-yl]- 5-(octyloxy)-phenol (CYASORB™ 1164); 2,2'-(1,4- phenylene)bis(4H-3,1-benzoxazin-4-one) (CYASORB™ UV- 3638); poly[(6-morphilino-s-triazine-2,4-diyl)[2,2,6,6-tetramethyl-4-piperidyl) imino]-hexamethylene[(2,2,6,6-tetramethyl-4-piperidyl)imino], 2-hydroxy-4-octyloxybenzophenone (UVINUL™3008), 6-tert-butyl-2-(5-chloro-2H-benzotriazole-2-yl)-4-methylphenyl (UVINUL™3026), 2,4-di-tert-butyl-6-(5-chloro-2H-benzotriazole-2-yl)-phenol (UVINUL™3027), 2-(2H-benzotriazole-2-yl)-4,6-di-tert-pentylphenol (UVINUL™3028), 2-(2H-benzotriazole-2-yl)-4-(1,1,3,3-tetramethylbutyl)-phenol (UVINUL™3029), 1,3-bis[(2'cyano-3',3'-diphenylacryloyl)oxy]-2,2-bis-{[(2'-cyano-3',3'-diphenylacryloyl)oxy]methyl}-propane (UVINUL™3030), 2-(2H-benzotriazole-2-yl)-4-methylphenol (UVINUL™3033), 2-(2H-benzotriazole-2-yl)-4,6-bis(1-methyl-1-phenyethyl)phenol (UVINUL™3034), ethyl-2-cyano-3,3-diphenylacrylate (UVINUL™3035), (2-ethylhexyl)-2-cyano-3,3-diphenylacrylate (UVINUL™3039), N,N'-bisformyl-N,N'-bis(2,2,6,6-tetramethyl-4-piperidinyl)hexamethylendiamine (UVINUL™4050H), bis-(2,2,6,6-tetramethyl-4-piperidyl)-sebacate (UVINUL™4077H), bis-(1,2,2,6,6-pentamethyl-4-piperdiyl)-sebacate + methyl-(1,2,2,6,6-pentamethyl-4-piperidyl)-sebacate (UVINUL™4092H) 1,3-bis[(2-cyano-3,3-diphenylacryloyl)oxy]-2,2-bis[[(2-cyano-3, 3-diphenylacryloyl)oxy]methyl]propane (UVINUL™3030); 2,2'-(1,4-phenylene) bis(4H-3,1-benzoxazin-4-one); 1,3-bis[(2-cyano-3,3-diphenylacryloyl)oxy]-2,2-bis[[(2-cyano-3,3-diphenylacryloyl)oxy]methyl]propane; TINUVIN™234; nano-size inorganic materials such as titanium oxide, cerium oxide, and zinc oxide, all with particle size less than or equal to 100 nanometers; or the like, or combinations comprising at least one of the foregoing UV absorbers. UV absorbers can be used in amounts of 0.01 to 1 part by weight, based on 100 parts by weight of polycarbonate and impact modifier. UV absorbers that can be particularly useful with the polycarbonate compositions disclosed herein include 2-(2H-benzotriazol-2-yl)-4-(1,1,3,3-tetramethylbutyl)-phenol (e.g., CYASORB™ 5411 commercially available from Cytec Industries, Inc., Woodland Park, New Jersey) and 2,2'-(1,4- phenylene)bis(4H-3,1-benzoxazin-4-one) (e.g., CYASORB™ UV- 3638, commercially available from Cytec Industries, Inc., Woodland Park, New Jersey), and combinations comprising at least one of the foregoing. The UV stabilizers can be present in an amount of 0.01 to 1 wt%, specifically, 0.1 to 0.5 wt%, and more specifically, 0.15 to 0.4 wt%, based upon the total weight of the polycarbonate composition.

Plasticizers, lubricants, and/or mold release agents can also be used. There is considerable overlap among these types of materials, which include, for example, phthalic acid esters such as dioctyl-4,5-epoxy-hexahydrophthalate; tris-(octoxycarbonylethyl) isocyanurate; tristearin; di- or polyfunctional aromatic phosphates such as resorcinol tetraphenyl diphosphate (RDP), the bis(diphenyl) phosphate of hydroquinone and the bis(diphenyl) phosphate of bisphenol A; poly-alpha-olefins; epoxidized soybean oil; silicones, including silicone oils; esters, for example, fatty acid esters such as alkyl stearyl esters, e.g., methyl stearate, stearyl stearate, pentaerythritol tetrastearate, and the like; combinations of methyl stearate and hydrophilic and hydrophobic nonionic surfactants comprising polyethylene glycol polymers, polypropylene glycol polymers, poly(ethylene glycol-co-propylene glycol) copolymers, or a combination comprising at least one of the foregoing glycol polymers, e.g., methyl stearate and polyethylene-polypropylene glycol copolymer in a suitable solvent; waxes such as beeswax, montan wax, paraffin wax, or the like.

The plasticizers, lubricants, and/or mold release agent can comprise compound of formula (I) 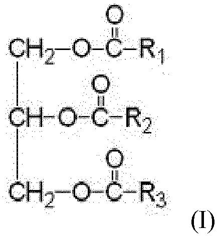 wherein R₁, R₂, and R₃ can be the same or different hydrocarbon chains with 8 to 20 carbon atoms and 0 to 6 unsaturations, wherein R₁, R₂, and R₃ are each independently selected from C₈-C₂₀ alkyl, C₈-C₂₀ haloalkyl, C₈-C₂₀ polyhaloalkyl, C₈-C₂₀ alkene, and C₈-C₂₀ alkoxy. R₁, R₂, and R₃ can each independently be from C₁₇H₃₅ or all R₁, R₂, and R₃ can be C₁₇H₃₅. The plasticizers, lubricants, and/or mold release agent can comprise glycerol monostearate, glycerol monopalmitate, glycerol tristearate, glycerol tristearate, stearyl stearate, or a combination comprising one or more of the foregoing. One or more of the aforementioned can have an acid value of 2 to 20 milligrams (mg) KOH as determined by: adding 100 milliliters (ml) of isopropanol to 2.5 grams (g) of a partial ester to thereby dissolve the partial ester; phenolphthalein is added to the resultant solution as an indicator; titrating the resultant mixture using a 0.1 moles per liter (mol/L) standard solution of potassium hydroxide to thereby obtain the acid value (mg KOH). In the measurement of the acid value, when it is expected that the partial ester has an acid value of 1 or less, the amount of the partial ester subjected to measurement is changed to 20 g; when it is expected that the partial ester has an acid value of from 1 to 4, the amount of the partial ester subjected to measurement is changed to 10 g; and when it is expected that the partial ester has an acid value of 15 or more, the amount of the partial ester subjected to measurement is changed to 0.5 g.

The plasticizers, lubricants, and/or mold release agent can be present in an amount of 0.01 to 5 parts by weight, specifically, 0.01 to 0.1 parts by weight, based on 100 parts by weight of polycarbonate and impact modifier.

Useful flame retardants include organic compounds that include phosphorus, bromine, and/or chlorine. Non-brominated and non-chlorinated phosphorus-containing flame retardants can be preferred in certain applications for regulatory reasons, for example organic phosphates and organic compounds containing phosphorus-nitrogen bonds.

Flame retardant aromatic phosphates include triphenyl phosphate, tricresyl phosphate, isopropylated triphenyl phosphate, phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, and 2-ethylhexyl diphenyl phosphate. Di- or polyfunctional aromatic phosphorus-containing compounds are also useful, for example resorcinol tetraphenyl diphosphate (RDP), the bis(diphenyl) phosphate of hydroquinone and the bis(diphenyl) phosphate of bisphenol A, respectively, and their oligomeric and polymeric counterparts. Flame retardant compounds containing phosphorus-nitrogen bonds include phosphonitrilic chloride, phosphorus ester amides, phosphoric acid amides, phosphonic acid amides, phosphinic acid amides, and tris(aziridinyl) phosphine oxide. When used, phosphorus-containing flame retardants are present in amounts of 0.1 to 30 parts by weight, more specifically 1 to 20 parts by weight, based on 100 parts by weight of the total composition, excluding any filler.

Halogenated materials can also be used as flame retardants, for example bisphenols of which the following are representative: 2,2-bis-(3,5-dichlorophenyl)-propane; bis-(2-chlorophenyl)-methane; bis(2,6-dibromophenyl)-methane; 1,1-bis-(4-iodophenyl)-ethane; 1,2-bis-(2,6-dichlorophenyl)-ethane; 1,1-bis-(2-chloro-4-iodophenyl)ethane; 1,1-bis-(2-chloro-4-methylphenyl)-ethane; 1,1-bis-(3,5-dichlorophenyl)-ethane; 2,2-bis-(3-phenyl-4-bromophenyl)-ethane; 2,6-bis-(4,6-dichloronaphthyl)-propane; and 2,2-bis-(3,5-dichloro-4-hydroxyphenyl)-propane 2,2 bis-(3-bromo-4-hydroxyphenyl)-propane. Other halogenated materials include 1,3-dichlorobenzene, 1,4-dibromobenzene, 1,3-dichloro-4-hydroxybenzene, and biphenyls such as 2,2'-dichlorobiphenyl, polybrominated 1,4-diphenoxybenzene, 2,4'-dibromobiphenyl, and 2,4'-dichlorobiphenyl as well as decabromo diphenyl oxide, as well as oligomeric and polymeric halogenated aromatic compounds, such as a copolycarbonate of bisphenol A and tetrabromobisphenol A and a carbonate precursor, e.g., phosgene. Metal synergists, e.g., antimony oxide, can also be used with the flame retardant. When present, halogen containing flame retardants are present in amounts of 1 to 25 parts by weight, more specifically 2 to 20 parts by weight, based on 100 parts by weight of the total composition, excluding any filler.

Inorganic flame retardants can also be used, for example salts of C₁₋₁₆ alkyl sulfonate salts such as potassium perfluorobutane sulfonate (Rimar salt), potassium perfluoroctane sulfonate, tetraethylammonium perfluorohexane sulfonate, and potassium diphenylsulfone sulfonate; salts such as Na₂CO₃, K₂CO₃, MgCO₃, CaCO₃, and BaCO₃, or fluoro-anion complexes such as Li₃AlF₆, BaSiF₆, KBF₄, K₃AlF₆, KAlF₄, K₂SiF₆, and/or Na₃AlF₆. When present, inorganic flame retardant salts are present in amounts of 0.01 to 10 parts by weight, more specifically 0.02 to 1 parts by weight, based on 100 parts by weight of the total composition, excluding any filler.

Anti-drip agents can also be used in the composition, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. An TSAN comprises 50 wt% PTFE and 50 wt% SAN, based on the total weight of the encapsulated fluoropolymer. The SAN can comprise, for example, 75 wt% styrene and 25 wt% acrylonitrile based on the total weight of the copolymer. Antidrip agents can be used in amounts of 0.1 to 10 parts by weight, based on 100 parts by weight of the total composition, excluding any filler.

The quenched composition can be essentially free of chlorine and bromine. "Essentially free of chlorine and bromine" is defined as having a bromine and/or chlorine content of less than or equal to 100 parts per million by weight (ppm), less than or equal to 75 ppm, or less than or equal to 50 ppm, based on the total parts by weight of the composition, excluding any filler.

The quenched composition can have a light transparency of greater than 90% as determined using 3.2 mm thick samples using ASTM D1003-00, Procedure B using CIE standard illuminant C, with unidirectional viewing. Accordingly, when the quenched composition has such a light transparency, it is herein referred to as an "optical grade" composition.
Embodiment 1: A melt polymerization process comprising: melt polymerizing reactants in the presence of a catalyst composition to form polymerized polycarbonate, wherein the catalyst composition comprises only a beta catalyst; adding a quencher composition to the polymerized polycarbonate, wherein the quencher composition comprises a quencher; and directing the polymerized polycarbonate to an extruder; wherein the beta catalyst comprises tetraphenyl phosphonium acetate.
Embodiment 2: The process of Embodiment 1, wherein the quencher composition comprises 1 to 10 ppm alkyl tosylate, based upon 100 parts of the polymerized polycarbonate.
Embodiment 3: The process of any of Embodiments 1 - 2, wherein the quencher composition comprises 1 to 10 ppm phosphorous acid, based upon 100 parts of the polymerized polycarbonate.
Embodiment 4: The process of any of Embodiments 1 - 3, wherein the quencher composition comprises n-butyl tosylate.
Embodiment 5: The process of any of Embodiments 1 - 4, wherein the melt polymerizing comprises reacting the reactants in a wire-wetting fall polymerizer.
Embodiment 6: The process of any of Embodiments 1 - 5, further comprising filtering the quencher composition prior to adding the quencher composition.
Embodiment 7: The process of any of Embodiments 1 - 6, wherein the melt polymerizing comprises a first stage polymerizing at a first stage temperature of 100°C to 280°C, and a second stage polymerizing at a second stage temperature of 250°C to 310°C, and wherein the first stage temperature is less than the second stage temperature.
Embodiment 8: The process of Embodiment 7, wherein the second stage polymerizing occurs at a second stage temperature of 260°C to 310°C and at a first-second stage pressure of 0.1 to 1 kPa (1 to 10 mbara); and a second-second stage temperature of 260°C to 300°C, and a second-second stage pressure of less than or equal to 0.5 kPa (5 mbara).
Embodiment 9: The process of any of Embodiments 1 - 8, wherein a ratio of quencher to catalyst is 3:1 to 2:1.
Embodiment 10: The process of any of Embodiments 1 - 9, further comprising devolatizing the polymerized polycarbonate, wherein the devolatizing occurs in the extruder and/or in the polymerization unit; and wherein the devolatizing occurs after quenching.
Embodiment 11: The process of any of Embodiments 1-10, wherein the process comprises: polymerizing polycarbonate in a series of first stage polymerization units; splitting a stream exiting a first stage into a stream A and a stream B, directing stream A to a second stage polymerization unit A and directing stream B to a second stage polymerization unit B; or polymerizing polycarbonate in a series of first stage polymerization units, then polymerizing in a series of second stage polymerization units, splitting a stream exiting a final second stage polymerization unit into a stream A and a stream B, directing stream A to an extruder A and directing stream B to an extruder B; or polymerizing polycarbonate in a series of first stage polymerization units, then polymerizing in a series of two second stage polymerization units; splitting a stream exiting a first-second stage polymerization unit into a stream A and a stream B, directing stream A to a second-second stage polymerization unit A and directing stream B to a second-second stage polymerization unit B.
Embodiment 12: The process of any of Embodiments 1 - 11, wherein adding the quencher composition comprises spraying the quencher composition onto pelletized polymerized polycarbonate.

As used herein, when referring to "reactive" or a "reactive group", e.g., having a reactive OH⁻ group or a reactive ester group, the reactivity is with respect to polycarbonate.

As used herein, when referring to polymerization units in the first and second stages, the number after the dash refers to the stage the polymerization unit is in and the number before the dash refers to the location of the polymerization within the stage. For example, a first-second stage polymerization unit is the first polymerization unit of the second stage polymerization units.

In general, the invention may alternately comprise, consist of, or consist essentially of, any appropriate components herein disclosed. The invention may additionally, or alternatively, be formulated so as to be devoid, or substantially free, of any components, materials, ingredients, adjuvants or species used in the prior art compositions or that are otherwise not necessary to the achievement of the function and/or objectives of the present invention.

All ranges disclosed herein are inclusive of the endpoints, and the endpoints are independently combinable with each other (e.g., ranges of "up to 25 wt%, or, more specifically, 5 to 20 wt%", is inclusive of the endpoints and all intermediate values of the ranges of "5 to 25 wt%," etc.). "Combination" is inclusive of blends, mixtures, alloys, reaction products, and the like. Furthermore, the terms "first," "second," and the like, herein do not denote any order, quantity, or importance, but rather are used to denote one element from another. The terms "a" and "an" and "the" herein do not denote a limitation of quantity, and are to be construed to cover both the singular and the plural, unless otherwise indicated herein or clearly contradicted by context. The suffix "(s)" as used herein is intended to include both the singular and the plural of the term that it modifies, thereby including one or more of that term (e.g., the film(s) includes one or more films). Reference throughout the specification to "one embodiment," "another embodiment," "an embodiment," and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments. Disclosure of a narrower range or more specific group in addition to a broader range is not a disclaimer of the broader range or larger group.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A melt polymerization process comprising:
melt polymerizing reactants in the presence of a catalyst composition to form polymerized polycarbonate, wherein the catalyst composition comprises only a beta catalyst;
adding a quencher composition to the polymerized polycarbonate, wherein the quencher composition comprises a quencher; and
directing the polymerized polycarbonate to an extruder
wherein the beta catalyst comprises tetraphenyl phosphonium acetate.

2. The process of Claim 1, wherein the quencher composition comprises 1 to 10 ppm alkyl tosylate, based upon 100 parts of the polymerized polycarbonate.

3. The process of any of Claims 1 - 2, wherein the quencher composition comprises 1 to 10 ppm phosphorous acid, based upon 100 parts of the polymerized polycarbonate.

4. The process of any of Claims 1 - 3, wherein the quencher composition comprises n-butyl tosylate.

5. The process of any of Claims 1 - 4, wherein the melt polymerizing comprises reacting the reactants in a wire-wetting fall polymerizer.

6. The process of any of Claims 1 - 5, further comprising filtering the quencher composition prior to adding the quencher composition.

7. The process of any of Claims 1 - 6, wherein the melt polymerizing comprises a first stage polymerizing at a first stage temperature of 100 to 280°C, and a second stage polymerizing at a second stage temperature of 250 to 310°C, and wherein the first stage temperature is less than the second stage temperature.

8. The process of Claim 7, wherein the second stage polymerizing occurs at a first-second stage temperature of 260 to 310°C and at a first-second stage pressure of 0.1 to 1 kPa (1 to 10 mbara); and a second-second stage temperature of 260 to 300°C and a second-second stage pressure of less than or equal to 0.5 kPa (5 mbara).

9. The process of any of Claims 1 - 8, wherein a ratio of quencher to catalyst is 3:1 to 2:1.

10. The process of any of Claims 1 - 9, further comprising devolatizing the polymerized polycarbonate, wherein the devolatizing occurs in the extruder and/or in a polymerization unit; and wherein the devolatizing occurs after quenching.

11. The process of any of Claims 1 - 10, wherein the process comprises:
polymerizing polycarbonate in a series of first stage polymerization units; splitting a stream exiting the first stage into a stream A and a stream B, directing stream A to a second stage polymerization unit A and directing stream B to a second stage polymerization unit B; or
polymerizing polycarbonate in a series of first stage polymerization units, then polymerizing in a series of second stage polymerization units, splitting a stream exiting a final second stage polymerization unit into a stream A and a stream B, directing stream A to an extruder A and directing stream B to an extruder B; or
polymerizing polycarbonate in a series of first stage polymerization units, then polymerizing in a series of two second stage polymerization units; splitting a stream exiting a first-second stage polymerization unit into a stream A and a stream B, directing stream A to a second-second stage polymerization unit A and directing stream B to a second-second stage polymerization unit B.

12. The process of any of Claims 1 - 11, wherein adding the quencher composition comprises spraying the quencher composition onto pelletized polymerized polycarbonate.

## Patentansprüche

1. Schmelzpolymerisationsverfahren, umfassend:
Schmelzpolymerisationsreaktanten in Gegenwart einer Katalysatorzusammensetzung zur Bildung von polymerisiertem Polycarbonat, wobei die Katalysatorzusammensetzung nur einen Beta-Katalysator umfasst;
Zugeben einer Quencherzusammensetzung zu dem polymerisierten Polycarbonat, wobei die Quencherzusammensetzung einen Quencher umfasst; und
Überführen des polymerisierten Polycarbonats zu einem Extruder
wobei der Beta-Katalysator Tetraphenylphosphoniumacetat umfasst.

2. Verfahren nach Anspruch 1, wobei die Quencherzusammensetzung 1 bis 10 ppm Alkyltosylat, bezogen auf 100 Teile des polymerisierten Polycarbonats, umfasst.

3. Verfahren nach einem der Ansprüche 1 bis 2, wobei die Quencherzusammensetzung 1 bis 10 ppm phosphorige Säure, bezogen auf 100 Teile des polymerisierten Polycarbonats, umfasst.

4. Verfahren nach einem der Ansprüche 1 bis 3, wobei die Quencherzusammensetzung n-Butyltosylat umfasst.

5. Verfahren nach einem der Ansprüche 1 bis 4, wobei das Schmelzpolymerisieren das Umsetzen der Reaktanten in einem Drahtbenetzungs-Fallpolymerisator umfasst.

6. Verfahren nach einem der Ansprüche 1 bis 5, ferner umfassend das Filtrieren der Quencherzusammensetzung vor dem Hinzufügen der Quencherzusammensetzung.

7. Verfahren nach einem der Ansprüche 1 bis 6, wobei das Schmelzpolymerisieren ein Polymerisieren einer ersten Stufe bei einer Temperatur der ersten Stufe von 100 bis 280 °C, und ein Polymerisieren einer zweiten Stufe bei einer Temperatur der zweiten Stufe von 250 bis 310 °C umfasst, und wobei die Temperatur der ersten Stufe niedriger ist als die Temperatur der zweiten Stufe.

8. Verfahren nach Anspruch 7, wobei die Polymerisation der zweiten Stufe bei einer ersten Temperatur der zweiten Stufe von 260 bis 310°C und bei einem ersten Druck der zweiten Stufe von 0,1 bis 1 kPa (1 bis 10 mbara); und bei einer zweiten Temperatur der zweiten Stufe von 260 bis 300 °C und einem zweiten Druck der zweiten Stufe von weniger als oder gleich 0,5 kPa (5 mbara) erfolgt.

9. Verfahren nach einem der Ansprüche 1 bis 8, wobei das Verhältnis von Quencher zu Katalysator 3: 1 bis 2: 1 beträgt.

10. Verfahren nach einem der Ansprüche 1 bis 9, ferner umfassend das Entgasen des polymerisierten Polycarbonats, wobei das Entgasen in dem Extruder und / oder in einer Polymerisationseinheit erfolgt; und wobei das Entgasen nach dem Quenchen erfolgt.

11. Verfahren nach einem der Ansprüche 1 bis 10, wobei das Verfahren umfasst:
das Polymerisieren von Polycarbonat in einer Reihe von Polymerisationseinheiten der ersten Stufe; Aufspalten eines aus der ersten Stufe austretenden Stroms in einen Strom A und einen Strom B, überführen des Stroms A zu einer Polymerisationseinheit A der zweiten Stufe und Überführen des Stroms B zu einer Polymerisationseinheit B der zweiten Stufe;
oder
Polymerisieren von Polycarbonat in einer Reihe von Polymerisationseinheiten der ersten Stufe, dann Polymerisieren in einer Reihe von Polymerisationseinheiten der zweiten Stufe, Aufspalten eines aus einer letzten Polymerisationseinheit der zweiten Stufe austretenden Stroms in einen Strom A und einen Strom B, Überführen von Strom A zu einem Extruder A und Überführen von Strom B zu einem Extruder B; oder
Polymerisieren von Polycarbonat in einer Reihe von Polymerisationseinheiten der ersten Stufe, dann Polymerisieren in einer Reihe von zwei Polymerisationseinheiten der zweiten Stufe; Aufspalten eines aus der ersten Polymerisationseinheit der zweiten Stufe austretenden Stroms in einen Strom A und einen Strom B, Überführen des Stroms A zu einer zweiten Polymerisationseinheit A der zweiten Stufe und Überführen des Stroms B zu einer zweiten Polymerisationseinheit B der zweiten Stufe.

12. Verfahren nach einem der Ansprüche 1 bis 11, wobei das Zugeben der Quencherzusammensetzung das Sprühen der Quencherzusammensetzung auf pelletisiertes polymerisiertes Polycarbonat umfasst.

## Revendications

1. Procédé de polymérisation à l'état fondu comprenant :
la polymérisation à l'état fondu de réactifs en présence d'une composition de catalyseur pour former un polycarbonate polymérisé, ladite composition de catalyseur comprenant uniquement un catalyseur bêta ;
l'addition d'une composition de désactivateur au polycarbonate polymérisé, ladite composition de désactivation comprenant un désactivateur ; et
l'envoi du polycarbonate polymérisé vers une extrudeuse,
dans lequel le catalyseur bêta comprend de l'acétate de tétraphénylphosphonium.

2. Procédé selon la revendication 1, dans lequel la composition de désactivateur comprend 1 à 10 ppm de tosylate d'alkyle pour 100 parties du polycarbonate polymérisé.

3. Procédé selon l'une quelconque des revendications 1 à 2, dans lequel la composition de désactivateur comprend 1 à 10 ppm d'acide phosphoreux pour 100 parties du polycarbonate polymérisé.

4. Procédé selon l'une quelconque des revendications 1 à 3, dans lequel la composition de désactivateur comprend du tosylate de n-butyle.

5. Procédé selon l'une quelconque des revendications 1 à 4, dans lequel la polymérisation à l'état fondu comprend la réaction des réactifs dans un polymériseur à chute de mouillage avec fil.

6. Procédé selon l'une quelconque des revendications 1 à 5, comprenant en outre la filtration de la composition de désactivateur avant l'addition de la composition de désactivateur.

7. Procédé selon l'une quelconque des revendications 1 à 6, dans lequel la polymérisation à l'état fondu comprend un premier étape de polymérisation à une température de premier étape de 100 à 280 °C, et un deuxième étape de polymérisation à une température de deuxième étape de 250 à 310 °C, et dans lequel la température de premier étape est inférieure à la température de deuxième étape.

8. Procédé selon la revendication 7, dans lequel le deuxième étape de polymérisation se déroule à une première température de deuxième étape, de 260 à 310 °C, et sous une première pression de deuxième étape, de 0,1 à 1 kPa (1 à 10 mbar absolus) ; et à une deuxième température de deuxième étape, de 260 °C à 300 °C, et sous une deuxième pression de deuxième étape, inférieure ou égale à 0,5 kPa (5 mbar absolus).

9. Procédé selon l'une quelconque des revendications 1 à 8, dans lequel le rapport du désactivateur au catalyseur est de 3:1 à 2:1.

10. Procédé selon l'une quelconque des revendications 1 à 9, comprenant en outre le dégazage du polycarbonate polymérisé, dans lequel le dégazage se déroule dans l'extrudeuse et/ou dans une unité de polymérisation ; et dans lequel le dégazage se déroule après la désactivation.

11. Procédé selon l'une quelconque des revendications 1 à 10, ledit procédé comprenant :
la polymérisation de polycarbonate dans une série d'unités de polymérisation de premier étape ; la division d'un courant sortant du premier étape en un courant A et un courant B, l'envoi du courant A vers une unité de polymérisation A de deuxième étape et l'envoi du courant B vers une unité de polymérisation de B deuxième étape ; ou
la polymérisation de polycarbonate dans une série d'unités de polymérisation de premier étape, puis la polymérisation dans une série d'unités de polymérisation de deuxième étape, la division d'un courant sortant d'une unité de polymérisation de deuxième étape finale en un courant A et un courant B, l'envoi du courant A vers une extrudeuse A et l'envoi du courant B vers une extrudeuse B ; ou
la polymérisation de polycarbonate dans une série d'unités de polymérisation de premier étape, puis la polymérisation dans une série de deux unités de polymérisation de deuxième étape ; la division d'un courant sortant de la première unité de polymérisation de deuxième étape en un courant A et un courant B, l'envoi du courant A vers une deuxième unité de polymérisation de deuxième étape A et l'envoi du courant B vers une deuxième unité de polymérisation de deuxième étape B.

12. Procédé selon l'une quelconque des revendications 1 à 11, dans lequel l'addition de la composition de désactivateur comprend la pulvérisation de la composition de désactivateur sur le polycarbonate polymérisé pastillé.
